# EUROPÄISCHE PATENTSCHRIFT

(11) **EP 3 441 647 B1**
(45) Veröffentlichungstag und Bekanntmachung des Hinweises auf die Patenterteilung: **04.03.2020**
(21) Anmeldenummer: 18179894.3
(22) Anmeldetag: 26.06.2018
(51) Int. Cl.: F16H 61/04

(54) **VERFAHREN ZUM SCHUTZ VOR EINER ÜBERLASTUNG EINER SYNCHRONISIERVORRICHTUNG**
METHOD FOR PROTECTING AGAINST OVERLOADING OF A SYNCHRONIZING DEVICE
PROCÉDÉ DE PROTECTION CONTRE LA SURCHARGE D'UN DISPOSITIF DE SYNCHRONISATION

(30) Priorität: 08.08.2017 DE 102017213844
(43) Veröffentlichungstag der Anmeldung: 13.02.2019
(73) Patentinhaber: VOLKSWAGEN AKTIENGESELLSCHAFT, 38440 Wolfsburg (DE)
(72) Erfinder: Hofmann, Rainer, 38350 Helmstedt (DE); Schmitz, Sven, 38126 Braunschweig (DE)

(56) Entgegenhaltungen:
- WO-A2-03/074906
- DE-A1- 10 221 267
- DE-A1-102007 004 183
- DE-A1-102015 221 157

## Beschreibung

Die Erfindung betrifft ein Verfahren zum Schutz vor einer Überlastung einer Synchronisiervorrichtung eines automatischen Getriebes eines Kraftfahrzeugs, insbesondere eines automatisierten Schaltgetriebes, gemäß den Merkmalen des Oberbegriffes des Patentanspruches 1.

Im Stand der Technik sind unterschiedliche Synchronisiervorrichtungen automatischer Getriebe eines Kraftfahrzeuges, insbesondere eines automatisierten Schaltgetriebes, bereits bekannt. Unter dem Begriff automatisches Getriebe fallen zunächst alle Getriebe von Kraftfahrzeugen, wo Gangstufenwechsel automatisch und/oder automatisiert durchgeführt und/oder gesteuert werden. Hierzu zählen beispielsweise automatisierte Schaltgetriebe bzw. insbesondere auch Doppelkupplungsgetriebe.

Im Allgemeinen ist allen Synchronisiervorrichtungen automatischer Getriebe eines Kraftfahrzeuges gemeinsam, dass diese zumindest einen äußeren und einen inneren Synchronring aufweisen, welche im Wesentlichen zueinander gerichtete, konzentrisch verlaufende Reibflächen aufweisen. Ferner wirkt die jeweilige Synchronisiervorrichtung grundsätzlich mit einem Losrad einer Gangstufe und der jeweiligen Welle, auf der das Losrad angeordnet ist, zusammen. Über die Reibflächen der Synchronisiervorrichtung wird die Drehzahl der zu synchronisierenden jeweiligen Welle angepasst, insbesondere auf die jeweilige Synchrondrehzahl gebracht, bevor der jeweilige Gangsteller betätigt und die jeweilige Gangstufe wirksam eingelegt wird, insbesondere das jeweilige Losrad dieser Gangstufe mit der entsprechenden Welle wirksam gekoppelt / verbunden wird. Bei einem Gangstufenwechsel wird die eingelegte Gangstufe (Ist-Gangstufe), insbesondere das Losrad dieser Gangstufe von der jeweiligen Welle wirksam entkoppelt und die dann einzulegende Gangstufe (Zielgangstufe), insbesondere das Losrad dieser Gangstufe formschlüssig mit der insbesondere zu synchronisierenden Welle gekoppelt bzw. wirksam verbunden. Durch den "Übersetzungssprung" bei einem Gangstufenwechsel, ergibt sich jedoch eine Drehzahldifferenz der zu synchronisierenden Welle zur Synchrondrehzahl der Zielgangstufe. Durch die jeweilige Synchronisiervorrichtung wird vor dem wirksamen Einlegen der Zielgangstufe diese Drehzahldifferenz ausgeglichen bzw. angeglichen, nämlich die zu synchronisierende Welle synchronisiert, insbesondere um einen ausreichenden Schaltkomfort zu erhalten. Die in Reibkontakt stehenden Reibflächen der Synchronisiervorrichtungen unterliegen naturgemäß hohen Belastungen, welche aufgrund der bestehenden Drehzahldifferenz zur Synchrondrehzahl der einzulegenden Gangstufe / Zielgangstufe in einer entsprechenden Weise je nach gewünschtem Gangstufenwechsel stark zunehmen können und dann zu einer Überlastung der jeweiligen Synchronisiervorrichtung führen können.

Aus der DE 102 33 699 A1, von der die Erfindung ausgeht, ist ein Verfahren zum Erkennen und/oder Schutz vor Überlastungen der Schaltelemente beim Betrieb automatischer oder automatisierter Getriebe bekannt. Das Verfahren ermittelt bei einem Gangstufenwechsel, die Belastung der Synchronisiervorrichtung der einzulegenden Gangstufe wenigstens bis zum Erreichen der Synchrondrehzahl oder zumindest über einen bestimmten Zeitraum, insbesondere bis zu einer maximal zulässigen bestimmten Schaltdauer. Die einzelnen Belastungen der Synchronisiervorrichtung werden aufsummiert und mit einer Vergleichsvariablen verglichen. Bei einer Unterschreitung des Wertes der Belastung mit dem Wert der Vergleichsvariablen, wird im Falle weiterer Schaltvorgänge, welche frei von der Betätigung dieser Synchronisiervorrichtung ist, die Vergleichsvariable für die Synchronisiervorrichtung nach vordefinierten Zeiträumen um einen bestimmten temperaturabhängigen Wert reduziert. Bei einer Überschreitung des Wertes der Belastung gegenüber dem Wert der Vergleichsvariablen wird nach Beendigung des letzten Gangstufenwechsels, jeder weitere Gangstufenwechsel mit Beteiligung dieser Synchronisiervorrichtung unterbunden.

Auch die DE 101 05 836 A1 zeigt ein Verfahren zur Früherkennung von Störfällen beim Betrieb automatischer oder automatisierter Getriebe, wobei das Verfahren (ähnlich wie bei der DE 102 33 699 A1) die Belastung von Schaltelementen bei einem Gangstufenwechsel ermittelt. Die Belastung der Synchronisiervorrichtung der einzulegenden Gangstufe wird auch wenigstens bis zum Erreichen der Synchrondrehzahl oder über einen vorgebbaren Zeitraum, welcher im Wesentlichen einem Wert bis zu einer maximalen zulässigen bestimmten Schaltdauer entspricht, errechnet. Die Belastung der Synchronisiervorrichtung wird aufsummiert und mit einer Vergleichsvariablen verglichen, wobei mit der Überschreitung des Wertes der Vergleichsvariablen ein Zustand definiert wird, in welchem auf eine Schädigung der an der Kraftübertragung beteiligten Synchronisiervorrichtung bei einem Gangstufenwechsel rückgeschlossen wird und wobei bei Unterschreitung dieses Wertes der Vergleichsvariablen dann eine Prüfung auf Vorliegen einer Schädigung der Synchronisiervorrichtung vorgenommen wird.

Die DE 10 2007 006 210 A1 zeigt ein Verfahren zum Betreiben eines Automatikgetriebes eines Kraftfahrzeuges, wobei die Funktion der Synchronisiervorrichtungen überwacht wird. Im Falle einer Detektion einer Störung des Getriebes bzw. einer Synchronisiervorrichtung wird ein Störungszähler inkrementiert und dann, wenn der Störungszähler einen Maximalwert überschreitet und die detektierte Störung einer Synchronisiervorrichtung eindeutig zugeordnet werden kann, eine Ersatzmaßnahme eingeleitet wird. Die Ersatzmaßnahme sieht vor in eine andere Gangstufe zu schalten, in der dann die als möglicherweise defekt detektierte Synchronisiervorrichtung nicht verwendet wird.

Die DE 10 2015 221 157 A1 zeigt ein Verfahren zum Steuern eines Gangstufenwechsels eines Kraftfahrzeug-Getriebes, wobei dieses Schritte des Auslegens einer ersten Gangstufe, des Abbremsens der Ausgangsseite des Getriebes, um eine Differenzdrehzahl zwischen Schaltelementen, die einer zweiten Gangstufe zugeordnet sind, in einen vorbestimmten Bereich zu bringen, und des Einlegens der zweiten Gangstufe umfasst.

Die DE 102 21 267 A1 offenbart ein Verfahren für den Gangwechsel in einem automatischen Getriebesystem eines Motorfahrzeuges mit einem mehrstufigen Wechselgetriebe mit einer Antriebswelle und einer Abtriebswelle, einer Anfahrkupplung, die zwischen der Antriebswelle und einer Abtriebswelle eines Motors angeordnet ist und einer Anzahl von Paaren ineinandergreifender Zahnräder.

Die im Stand der Technik bekannten Verfahren zum Schutz vor einer Überlastung einer Synchronisiervorrichtung eines automatischen Getriebes eines Kraftfahrzeuges sind noch nicht optimal ausgebildet. Bei den im Stand der Technik bekannten Verfahren wird die Betätigung der Synchronisiervorrichtung unterbunden, wenn eine Schädigung erfolgt ist oder eine zu hohe Belastung während der Betätigung vorliegt. Dies kann dann zu einem Ausfall der jeweiligen Synchronisiervorrichtung möglicherweise auch zu einem Ausfall des Getriebes führen. Im Endeffekt kann dies daher zu erheblichen Reparaturkosten und/oder zu Ausfallzeiten des Kraftfahrzeuges führen. Im Ergebnis sind die im Stand der Technik bekannten Verfahren zum Schutz vor einer Überlastung einer Synchronisiervorrichtung daher noch nicht optimal ausgebildet.

Der Erfindung liegt daher die Aufgabe zugrunde, das eingangs genannte Verfahren nun derart auszugestalten und weiterzubilden, dass die Reparaturkosten und/oder die Ausfallzeiten des Kraftfahrzeuges vermindert sind, insbesondere bei einem Gangstufenwechsel ungünstige Betriebszustände und/oder Überlastungen einer beteiligten Synchronisiervorrichtung verringert und/oder vermieden sind.

Die zuvor aufgezeigte Aufgabe ist nun zunächst durch die Merkmale des Patentanspruches 1 gelöst.

Die Drehzahl der zu synchronisierenden, hier insbesondere ersten Welle wird gemessen. Hierbei wird dann, insbesondere fortlaufend die Drehzahldifferenz zwischen der ersten Welle und der zur Zielgangstufe korrespondierenden Synchrondrehzahl ermittelt. Erst dann, wenn die betragsmäßig ermittelte Drehzahldifferenz einen vorbestimmten Drehzahldifferenz-Schwellwert von 3000U/min erreicht oder unterschreitet, wird die Synchronisiervorrichtung der Zielgangstufe betätigt. Mit dem Ausdruck "wird die Synchronisiervorrichtung betätigt" ist grundsätzlich gemeint, dass die Synchronisiervorrichtung dann entsprechend angesteuert wird, wenn die betragsmäßig ermittelte Drehzahldifferenz den vorbestimmten Drehzahldifferenz-Schwellwert erreicht oder unterschreitet. Es wird dann der Gangsteller der Zielgangstufe entsprechend betätigt, nämlich aus seiner Neutralstellung in Richtung des Einlegens der Zielgangstufe verschoben. Kurz nach dem Verschieben / Betätigen des Gangstellers kommen dann die Reibflächen der Synchronisiervorrichtung miteinander in Kontakt. Bei dem hier beschriebenen Ausführungsbeispiel wäre dann das "Betätigen der Synchronisiervorrichtung" gleichzusetzen, mit dem Start / der Verschiebung / der Bewegung des Gangstellers aus seiner Neutralstellung in Richtung des Einlegens der Zielgangstufe, wobei die wirksame Synchronisierung der Drehzahl der ersten Welle - zeitlich betrachtet - kurze Zeit später nach der entsprechenden Ansteuerung / Betätigung des Gangstellers eintritt, nämlich dann, wenn die Reibflächen der Synchronisiervorrichtung dann tatsächlich miteinander in Kontakt kommen, insbesondere nämlich wenn der Gangsteller einen bestimmten Weg aus seiner Neutralposition bereits zurückgelegt hat.

Das Grundprinzip der Erfindung geht also zunächst dahin, dass eine Überlastung und/oder eine Schädigung einer an einem Gangstufenwechsel beteiligten Synchronisiervorrichtung nicht - wie bisher im Stand der Technik - durch geeignete Maßnahmen vermieden werden, die erst nach dem tatsächlichen Auftreten und/oder dem Feststellen einer bereits an der Synchronisiervorrichtung anliegenden Überlastung und/oder einer bereits erfolgten Schädigung durchgeführt werden, sondern insbesondere gemäß der Erfindung nun entsprechende Maßnahmen durchgeführt werden, grundsätzlich bevor im Wesentlichen derartige Belastungen und/oder Schädigungen an den jeweiligen Synchronisiervorrichtungen auftreten können. Dies darf im Folgenden nun noch näher erläutert werden:
Zur Realisierung der Gangstufenwechsel des Getriebes und/oder zur Steuerung der Kupplung und/oder zur Steuerung der Synchronisiervorrichtungen und/oder der Gangsteller ist ein Steuergerät vorgesehen, welches entsprechende elektrische und/oder elektronische Baueinheiten aufweist. Diesem Steuergerät werden zumindest die Drehzahlen der am jeweiligen Gangstufenwechsel beteiligten ersten und/oder zweiten Welle, insbesondere einer Getriebeeingangswelle und einer Getriebeausgangswelle übermittelt bzw. werden diese Drehzahlen vom Steuergerät auf Basis entsprechender Signale (Drehzahlsensoren) fortlaufend berechnet. Demgemäß werden insbesondere die Drehzahlen der einzelnen Wellen des Getriebes und/oder der Motorwelle, insbesondere die Drehzahl der Getriebeeingangswelle(n) und/oder weiterer Triebwellen des Getriebes und/oder der Getriebeausgangswelle des Getriebes ermittelt. Die Drehzahl der bei einem Gangstufenwechsel zu synchronisierenden, hier ersten Welle wird insbesondere fortlaufend ermittelt. Bei der Ausführungsform des Getriebes als ein Doppelkupplungsgetriebe wird beispielsweise die Drehzahl einer der Getriebeeingangswellen fortlaufend ermittelt, insbesondere der ersten Getriebeeingangswelle ermittelt, wenn beispielsweise von der ersten Gangstufe in die dritte Gangstufe (1 → 3), also von der ersten Gangstufe (1. Gang) als Ist-Gang in die dritte Gangstufe (3. Gang) als Zielgangstufe geschaltet werden soll. Es wird die Drehzahldifferenz zwischen der ersten Welle, hier insbesondere beim Doppelkupplungsgetriebe einer der beiden Getriebeeingangswellen, und der zur Zielgangstufe korrespondierende Synchrondrehzahl ermittelt, insbesondere wird diese Drehzahldifferenz fortlaufend und der jeweilige "Betrag" dieser Drehzahldifferenz ermittelt. Erst dann, wenn die betragsmäßig ermittelte Drehzahldifferenz einen vorbestimmten Drehzahldifferenz-Schwellwert erreicht oder unterschreitet, wird die Synchronisiervorrichtung der Zielgangstufe betätigt, insbesondere also die Synchronisierung der ersten Welle mit Hilfe der Synchronisiervorrichtung der Zielgangstufe gestartet. Oder, anders ausgedrückt: Die Drehzahl der zu synchronisierenden, hier ersten Welle wird, insbesondere fortlaufend ermittelt, wobei einerseits die zur Zielgangstufe korrespondierende Synchrondrehzahl der zu synchronisierenden, hier ersten Welle bekannt ist, und andererseits ein Drehzahldifferenz-Schwellwert vorbestimmt ist. Ist die dann aktuelle Drehzahldifferenz zwischen der ersten Welle und der zur Zielgangstufe korrespondierenden Synchrondrehzahl "genügend gering", insbesondere betragsmäßig kleiner oder gleich einen vorbestimmten Drehzahldifferenz-Schwellwert, so wird erst dann die Synchronisationsvorrichtung der Zielgangstufe betätigt und die zu synchronisierende, erste Welle mit Hilfe der Synchronisiervorrichtung der Zielgangstufe synchronisiert. Damit ist die Synchronisiervorrichtung der Zielgangstufe vor Überlastungen und Beschädigungen geschützt, bevor diese überhaupt auftreten können, da der zuvor genannte "Drehzahldifferenz-Schwellwert" entsprechend zuvor bestimmt und/oder im Steuergerät abgespeichert / abgelegt ist.

Das Steuergerät regelt und/oder steuert aufgrund der dem Steuergerät zugeführten Eingangsdaten die entsprechenden Steuerungsabläufe innerhalb des Getriebes sowie die entsprechenden Synchronisiervorrichtungen und/oder das Ein- und/oder Auskuppeln der mindestens einen Kupplung. Anders ausgedrückt, mit Hilfe des Steuergerätes kann auch an der Kupplung selbst eine bestimmte Kupplungsstellkraft / ein Schleppmoment realisiert werden. Die entsprechende Realisierung der Kräfte sind über diverse Hydraulikkreisläufe und entsprechende hydraulisch betätigbare Aktuatoren oder auch über entsprechend elektrisch betätigbare Aktuatoren realisierbar.

Vorsorglich wird, wenn nach einer vorbestimmten Wartezeit, insbesondere von maximal 2 Sekunden, die ermittelte Drehzahldifferenz den vorbestimmten Drehzahldifferenz-Schwellwert betragsmäßig nicht erreicht oder nicht unterschreitet die Synchronisiervorrichtung der Zielgangstufe dennoch betätigt (als "Ausnahme" von der "Grundeinstellung" des Verfahrens). Dies stellt sicher, dass eine Schaltung in die Zielgangstufe des Getriebes nach einer vorbestimmten Wartezeit auch erfolgen kann. Im Normalfall bzw. im gewünschten Fall wird aber erst nach dem Erreichen oder Unterschreiten des vorbestimmten Drehzahldifferenz-Schwellwertes die Synchronisiervorrichtung der Zielgangstufe betätigt bzw. aktiviert und nach dem Erreichen der Synchrondrehzahl der zu synchronisierenden ersten Welle, die Zielgangstufe wirksam eingelegt bzw. der zugehörige Gangsteller weiter verschoben.

Denkbar ist auch, dass mindestens eine weitere Gangstufe zur Anpassung der Drehzahl der ersten Welle vor der Betätigung der Synchronisiervorrichtung der Zielgangstufe ansynchronisiert wird, insbesondere bis die betragsmäßig ermittelte Drehzahldifferenz den vorbestimmten Drehzahldifferenz-Schwellwert erreicht oder unterschreitet. Anders ausgedrückt: Beispielsweise bei einem Gangstufenwechsel vom fünften in den zweiten Gang (5 → 2) kann beispielsweise der dritte oder der vierte Gang "ansynchronisiert" werden, um die Drehzahl der zu synchronisieren ersten Welle in Richtung der Synchrondrehzahl anzupassen, ohne dass die Synchronisiervorrichtung der Zielgangstufe direkt benutzt / verwendet wird. Dies ist insbesondere abhängig von der Art und dem Aufbau des jeweiligen automatischen Getriebes, insbesondere des automatisierten Schaltgetriebes. Insbesondere ist dies abhängig von der Anzahl der Wellen, insbesondere von der Anzahl der Getriebeeingangswellen, der Getriebeausgangswellen, der Triebwellen und/oder weiterer im Getriebe vorgesehener Zwischenwellen und der diesen jeweiligen Wellen zugeordneten jeweiligen Gangstufen.

Denkbar ist auch, dass durch das zumindest teilweise Schließen der Kupplung eine Anpassung der Drehzahl der ersten Welle vor der Betätigung der Synchronisiervorrichtung der Zielgangstufe realisiert wird, insbesondere der vorbestimmte Drehzahldifferenz-Schwellwert betragsmäßig von der ermittelten Drehzahldifferenz erreicht oder unterschritten wird. Eine Steuerung der Kupplung wird dann über das Steuergerät realisiert. Zudem ist mittels des Steuergeräts auch die Variation bzw. die Erhöhung des Schleppmoments der Kupplung mittels des Kühlölstroms realisierbar, und somit auch die Anpassung der Drehzahl der ersten Welle bzw. deren Synchronisierung durchführbar.

Ferner kann durch eine in dem Steuergerät hinterlegte maximale Wartezeit eine Betätigung einer an einem Gangstufenwechsel beteiligten Synchronisiervorrichtung verzögert bzw. nach Ablauf dieser Wartezeit "aktiviert" werden. Die maximale Wartezeit liegt hierbei insbesondere zwischen 2 und 4 Sekunden, vorzugsweise 2 Sekunden. Anders ausgedrückt: Die Synchronisiervorrichtung der Zielgangstufe kann nach einer maximalen Wartezeit betätigt werden. Dies dient als bereits oben beschriebene "Ausnahme" von dem grundsätzlich durchzuführenden erfindungsgemäßen Verfahren, insbesondere um das Einlegen der Zielgangstufe dennoch wirksam innerhalb eines bestimmten Zeitraums zu realisieren, auch wenn die ermittelte Drehzahldifferenz betragsmäßig den vorbestimmten Drehzahldifferenz-Schwellwert noch nicht erreicht oder unterschritten hat.

Weiterhin kann in dem Steuergerät nicht nur eine maximale Wartezeit hinterlegt sein, sondern insbesondere auch in Abhängigkeit bestimmter Gangstufenwechsel verschiedene bestimmte maximale Wartezeiten abgespeichert und/oder hinterlegt sein. Insbesondere kann das Steuergerät auch eine oder mehrere hinterlegte "Schaltmuster" aufweisen, mit deren Hilfe in Abhängigkeit der Drehzahl der ersten Welle, in Abhängigkeit der gewünschten Zielgangstufe, in Abhängigkeit des bestimmten Drehzahldifferenz-Schwellwertes und/oder in Abhängigkeit der zur Zielgangstufe korrespondierenden Synchrondrehzahl dann hierauf basierend mindestens eine weitere Gangstufe (als Zwischenstufe) zur Anpassung der Drehzahl der ersten Welle in Richtung der Synchrondrehzahl vorgegeben wird. Das im Steuergerät jeweils dann hinterlegte "Schaltmuster" kann hierzu also vorsehen, dass mindestens eine weitere Gangstufe, zur Anpassung der Drehzahl der ersten Welle "zwischengeschaltet" wird, nämlich die entsprechende jeweilige Synchronisiervorrichtung dieser "Zwischengangstufe "ansynchronisiert" wird.

Gemäß dem erfindungsgemäßen Verfahren ist nicht nur die an einem Gangstufenwechsel beteiligte Synchronisiervorrichtung der Zielgangstufe vor einer Überlastung bzw. einer Beschädigung geschützt, sondern auch der Fahrkomfort des Fahrzeugs bleibt erhalten.

Im Ergebnis sind die eingangs beschriebenen Nachteile vermieden und entsprechende Vorteile sind erzielt.

Es gibt nun unterschiedliche Möglichkeiten das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Nachfolgend soll nun ein bevorzugtes Ausführungsbeispiel der Erfindung anhand der nachfolgenden Zeichnung und der zugehörenden Beschreibung näher erläutert werden. In der Zeichnung zeigt:

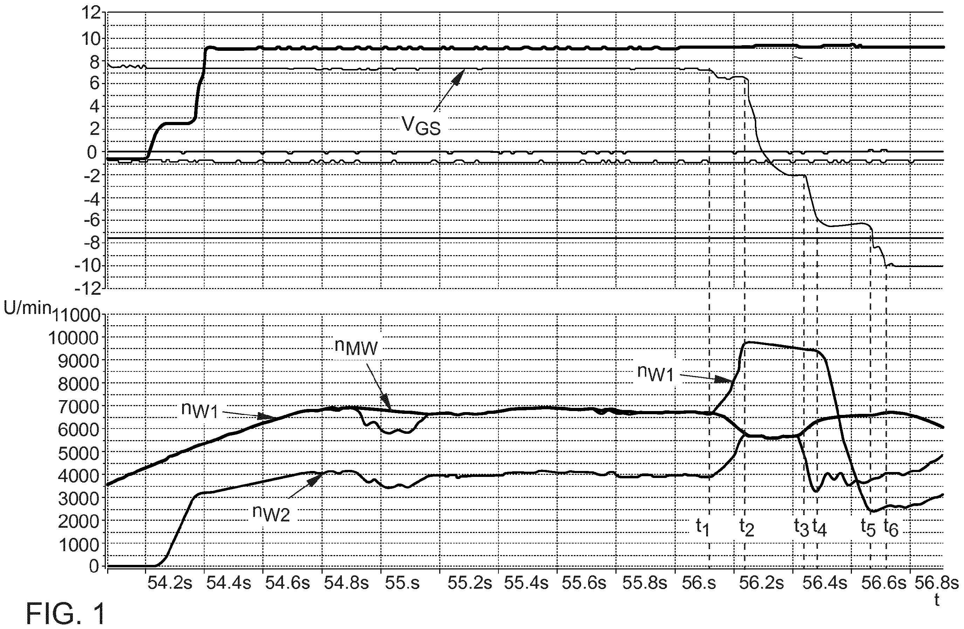

- Fig. 1: ein Diagramm des Drehzahlverlaufs einer Motorwelle, einer ersten Welle, insbesondere einer ersten Getriebeeingangswelle, und einer weiteren Welle, insbesondere einer zweiten Getriebeeingangswelle eines Doppelkupplungsgetriebes, sowie den Verlauf / die Betätigung eines Gangstellers bzw. die Schaltstellung (Weg) des Gangstellers bei einem Gangstufenwechsel vom ersten in den dritten Gang bei einem Doppelkupplungsgetriebe gemäß dem bekannten Stand der Technik, sowie dann

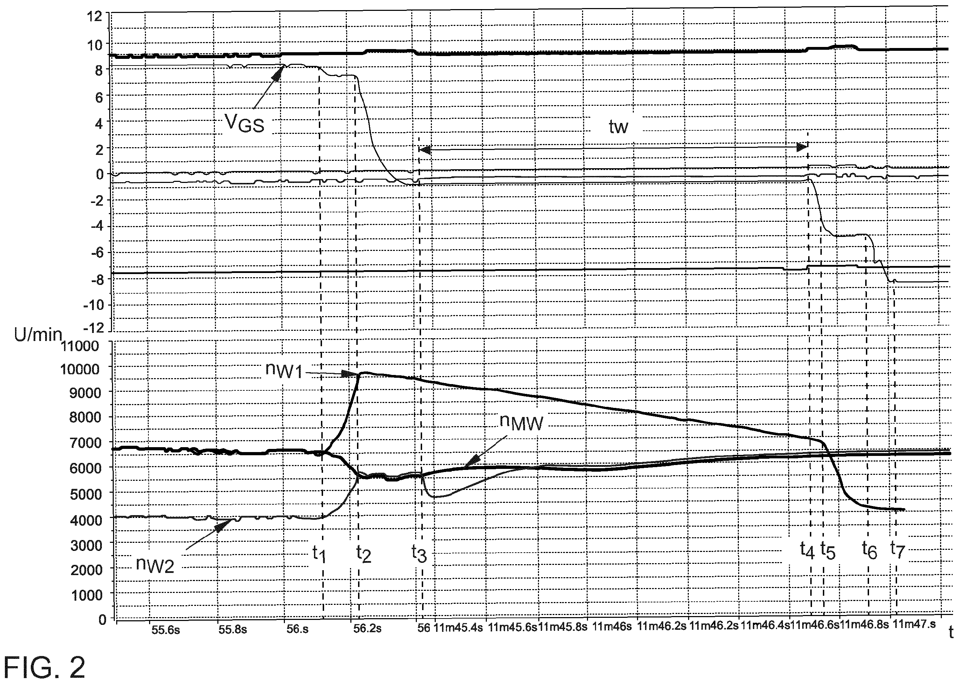

- Fig. 2: ein Diagramm des Drehzahlverlaufs einer Motorwelle, einer ersten Welle, insbesondere einer ersten Getriebeeingangswelle, und einer weiteren Welle, insbesondere einer zweiten Getriebeeingangswelle eines Doppelkupplungsgetriebes, sowie den Verlauf / die Betätigung eines Gangstellers bzw. die Schaltstellung (Weg) des Gangstellers, bei einem Gangstufenwechsel vom ersten in den dritten Gang bei einem Doppelkupplungsgetriebe nach dem erfindungsgemäßen Verfahren.

Die Fig. 1 und Fig. 2 zeigen jeweils ein Diagramm des Drehzahlverlaufs verschiedener Wellen eines automatischen Getriebes eines Kraftfahrzeugs, hier insbesondere eines Doppelkupplungsgetriebes bei einem Schaltvorgang von der ersten Gangstufe (1. Gang) als wirksam eingelegte Ist-Gangstufe in die dritte Gangstufe (3. Gang) als gewünschte Zielgangstufe. Die Schaltstellung bzw. der Verlauf des Schaltweges des Gangstellers V_{GS} ist ebenfalls entsprechend dargestellt. Fig. 1 zeigt hier einen im Stand der Technik bereits bekannten Schaltablauf, wobei Fig. 2 den Schaltablauf des erfindungsgemäßen Verfahrens darstellen soll.

Ganz allgemein darf hier vorausgeschickt werden, dass das erfindungsgemäße Verfahren grundsätzlich bei jedem automatischen Getriebe, insbesondere jeden automatisierten Schaltgetriebe angewendet werden kann, insbesondere der Schaltablauf hier jedoch anhand eines automatisierten Doppelkupplungsgetriebes beschrieben wird. Denkbar sind auch andere Getriebeformen, insbesondere auch andere automatisierte Schaltgetriebe, die eine Getriebeeingangswelle und eine Getriebeausgangswelle aufweisen.

Zum Schaltablauf bzw. Verfahren darf zunächst allgemein folgendes ausgeführt werden:
Das Verfahren dient zum Schutz vor einer Überlastung einer Synchronisiervorrichtung eines automatischen Getriebes eines Kraftfahrzeuges, insbesondere eines automatisierten Schaltgetriebes, vorzugsweise eines Doppelkupplungsgetriebes. Ein erfindungsgemäßer Schaltablauf ist hier in Fig. 2 für das Doppelkupplungsgetriebe dargestellt ist.

Ein entsprechendes automatisches Getriebe weist mindestens eine Kupplung, mindestens eine erste und eine zweite Welle, mindestens zwei Gangstufen, vorzugsweise mehrere Gangstufen, mindestens einen Gangsteller, vorzugsweise mehrere Gangsteller, zum wirksamen Ein- oder Auslegen der jeweiligen Gangstufen auf. Weiterhin weist das automatische Getriebe mindestens zwei Synchronisiervorrichtungen auf, wobei jeweils eine der mindestens zwei Synchronisiervorrichtungen jeweils mindestens einer der mindestens zwei Gangstufen zugeordnet ist. Über die jeweilige, wirksam eingelegte Gangstufe ist ein Drehmoment von der ersten Welle auf die zweite Welle (oder umgekehrt) übertragbar. Bei einem Gangstufenwechsel von einer wirksam eingelegten Ist-Gangstufe, beispielsweise von der ersten Gangstufe (1. Gang) in eine gewünschte Zielgangstufe, beispielsweise in die dritte Gangstufe (3. Gang), wird die Drehzahl der zu synchronisierenden ersten Welle n_{W1} hier bei dem in Fig. 1 und Fig. 2 dargestellten Beispiel die Drehzahl n_{w1} der ersten Getriebeeingangswelle des Doppelkupplungsgetriebes, auf die zur Zielgangstufe, hier zur dritten Gangstufe (3. Gang), korrespondierende Synchrondrehzahl mit Hilfe der der Zielgangstufe zugeordneten Synchronisiervorrichtung zumindest teilweise angepasst, insbesondere entsprechend synchronisiert. Hierzu ist, unabhängig von der spezifischen Ausführung des jeweiligen automatischen Getriebes mindestens ein Steuergerät zur Realisierung der Gangstufenwechsel des Getriebes und/oder zur Steuerung der Kupplung und/oder zur Steuerung der jeweiligen Synchronisiervorrichtungen und/oder der jeweiligen Gangsteller vorgesehen. Die zuletzt genannten Komponenten sind hier in den Fig. 1 und 2 nicht explizit bzw. nur teilweise dargestellt.

In Fig. 1 ist ein Gangstufenwechsel über der Zeit t aufgetragen, wobei hier ein aus dem Stand der Technik bekannter beispielhafter Verlauf des Gangstellers V_{GS} dargestellt ist. Der Gangsteller V_{GS} ist anfangs in der aktivierten Stellung bzw. ist die Ist-Gangstufe, hier die erste Gangstufe (1. Gang) wirksam eingelegt, wobei dann der Gangsteller V_{GS} in die Neutralposition (neutral) geschaltet wird und diese Neutralstellung zum Zeitpunkt t₃ vollständig erreicht. Erst ab dem Zeitpunkt t₅ bis zum Zeitpunkt t₆ wird der Gangsteller dann in seine Schaltposition zum wirksamen Einlegen der dritten Gangstufe (3. Gang) verbracht bzw. geschaltet, wobei zwischen den Zeitpunkten t₄ und t₅ die Synchronisation der Drehzahl n_{W1} der ersten Welle erfolgt, die Synchronisiervorrichtung der Zielgangstufe kurz zuvor im Zeitpunkt t₃ betätigt wird, nämlich wenn der Gangsteller aus seiner Neutralposition in Richtung des Einlegens der Zielgangstufe verschoben wird, wobei die Reibflächen der Synchronisiervorrichtung im Zeitpunkt t₄ miteinander in Kontakt kommen.

Aus der Fig. 1 unten ist ebenfalls gut zu erkennen, dass zum Zeitpunkt t₁ die Ist-Gangstufe (erste Gangstufe) ausgelegt wird und sich die Drehzahl der ersten Welle nwi, insbesondere hier die Drehzahl n_{W1} der ersten Getriebeeingangswelle des Doppelkupplungsgetriebes zunächst "hochgerissen" wird. Die Drehzahl n_{W1} der ersten Welle, hier der ersten Getriebeeingangswelle erfährt einen Drehzahlsprung von ca. 7000 U/min auf ca. 9500 U/min. Ab dem Zeitpunkt t₁ wird der Gangstelle G_{GS} in Richtung der Neutralposition verfahren, wobei zum Zeitpunkt t₃ das Verschieben des Gangstellers in seine Neutralposition abgeschlossen ist. Es erfolgt nun ab dem Zeitpunkt t₄ die Synchronisation der Drehzahl n_{W1} der ersten Welle, hier der ersten Getriebeeingangswelle des Doppelkupplungsgetriebes auf die zur Zielgangstufe korrespondierende Synchrondrehzahl. In Fig. 1 unten ist deutlich zu sehen, dass die Drehzahl n_{W1} ab dem Zeitpunkt t₄, insbesondere zwischen den Zeitpunkten t₄ und t₅ entsprechend fällt, insbesondere hier auf die zur dritten Gangstufe (3. Gang) korrespondierende Synchrondrehzahl reduziert wird. Nach dem Erreichen der Synchrondrehzahl wird dann der Gangsteller in die Schaltstellung für die dritte Gangstufe (3. Gang) geschaltet. Fig. 1 macht deutlich, dass - im bekannten Stand der Technik - unabhängig von der tatsächlichen aktuellen Drehzahl der zu synchronisierenden ersten Welle, hier der ersten Getriebeeingangswelle des Doppelkupplungsgetriebes, eine Synchronisierung der ersten Welle, hier der ersten Getriebeeingangswelle über die Synchronisiervorrichtung der Zielgangstufe erfolgt.

Allgemein darf an dieser Stelle noch darauf hingewiesen werden, dass die Begrifflichkeit "erste Welle" bzw. "zweite Welle" hier nicht eingeschränkt verwendet wird, sondern insbesondere mit dem Begriff "erste Welle" eine zu synchronisierende Welle des automatisierten Getriebes gemeint ist und mit dem Begriff "zweite Welle" eine andere im Getriebe vorgesehene Welle gemeint ist.

In Fig. 2 ist nun das erfindungsgemäße Verfahren dargestellt. Dies wird nun insbesondere anhand des Schaltablaufes bei einem automatischen, hier insbesondere automatisierten Doppelkupplungsgetriebes näher erläutert.

Es darf an dieser Stelle nochmals erwähnt werden, dass der Schaltungsablauf in Fig. 2 hier für ein automatisiertes Doppelkupplungsgetriebe dargestellt ist, dass erfindungsgemäße Verfahren jedoch auch bei anderen automatischen und/oder automatisierten Schaltgetrieben entsprechend angewendet bzw. realisiert werden kann.

Die eingangs genannten Nachteile sind nun zunächst dadurch vermieden, dass die Drehzahl n_{W1} der ersten Welle, hier dann der ersten Getriebeeingangswelle des Doppelkupplungsgetriebes, gemessen bzw. ermittelt wird, dass die Drehzahldifferenz zwischen der ersten Welle und der zur Zielgangstufe korrespondierenden Synchrondrehzahl ermittelt wird, wobei erst dann, wenn die betragsmäßig ermittelte Drehzahldifferenz einen vorbestimmten Drehzahldifferenz-Schwellwert erreicht oder unterschreitet, die Synchronisierung der Zielgangstufe betätigt wird. Oder, anders ausgedrückt: Die Synchronisierung der ersten Welle, hier insbesondere der ersten Getriebeeingangswelle des Doppelkupplungsgetriebes, wird mit Hilfe der Synchronisiervorrichtung der Zielgangstufe erst dann durchgeführt bzw. realisiert, wenn die ermittelte Drehzahldifferenz "genügend gering" ist. Dadurch werden die eingangs genannten Vorteile erzielt und es sind entsprechende Nachteile vermieden. Insbesondere wird die Synchronisiervorrichtung der Zielgangstufe vor einer Überlastung und/oder vor einer Beschädigung geschützt, wobei die Reparaturkosten und/oder die Ausfallzeiten des Kraftfahrzeuges reduziert sind und/oder der Fahrkomfort hoch ist.

In Fig. 2 oben ist nun zu erkennen, dass hier ein zu der Fig. 1 vergleichbarer Gangstufenwechsel über der Zeit t aufgetragen ist, nämlich von der ersten Gangstufe (1. Gang) als Ist-Gangstufe zur dritten Gangstufe (3. Gang) als Zielgangstufe. Der Verlauf des Gangstellers V_{GS} wird unter Bezugnahme auf das erfindungsgemäße Verfahren nun entsprechend dargestellt. Ebenfalls sind Zeitpunkte t₁ bis t₆ bzw. t₇ ersichtlich, wozu im Folgenden noch Näheres ausgeführt werden darf. Zunächst zum Verlauf des Gangstellers V_{GS}:
Der Gangsteller ist anfangs zum Zeitpunkt t₁ wirksam eingelegt und verbindet die erste Gangstufe als Ist-Gangstufe, hier den 1. Gang wirksam mit der ersten Welle, hier insbesondere mit der ersten Getriebeeingangswelle des Doppelkupplungsgetriebes. Dargestellt ist ebenfalls die Drehzahl n_{W1} der ersten Welle, hier insbesondere der ersten Getriebeeingangswelle des Doppelkupplungsgetriebes. Zum Zeitpunkt t₂ bzw. t₃ wird bzw. ist der Gangsteller dann in seine Neutralposition geschaltet und hält diese Neutralposition zwischen den Zeitpunkten t₃ bis t₄ auch entsprechend bei, so wie in Fig. 2 dargestellt. In Fig. 2 unten ist weiter gut zu erkennen, dass die Drehzahl n_{W1} der ersten Welle, hier der ersten Getriebeeingangswelle des Doppelkupplungsgetriebes, zwischen den Zeitpunkten t₁ und t₂ "hochgerissen" wird, insbesondere solange die erste Gangstufe / der erste Gang bis zum Zeitpunkt t₂ noch wirksam geschaltet ist. Hiernach aber, also ab dem Zeitpunkt t₂, wenn die erste Gangstufe / der erste Gang nicht mehr eingelegt ist und der Gangsteller V_{GS} in Richtung der Neutralposition geschaltet wird, verringert sich die Drehzahl n_{W1} der ersten Welle, hier der ersten Getriebeeingangswelle des Doppelkupplungsgetriebes, im Wesentlichen gleichmäßig und läuft "harmonisch", insbesondere im Wesentlichen linear herunter bis zum Zeitpunkt t₄ bzw. t₅. In diesem Zeitraum zwischen den Zeitpunkten t₂ und t₄ bzw. t₅ der Fig. 2 findet keine Synchronisierung der Drehzahl n_{W1} der ersten Welle, hier der ersten Getriebeeingangswelle des Doppelkupplungsgetriebes mit Hilfe der Synchronisiervorrichtung der Zielgangstufe, hier der Synchronisiervorrichtung der dritten Gangstufe (3. Gang) statt. Eine wirksame Synchronisierung mit Hilfe der Synchronisiervorrichtung der Zielgangstufe, hier der dritten Gangstufe (3. Gang) findet erst zwischen den Zeitpunkten t₅ und t₆ statt. Hierzu wird die Drehzahl n_{W1} der ersten Welle, hier der ersten Getriebeeingangswelle insbesondere fortlaufend ab dem Zeitpunkt t₁ bzw. t₂ ermittelt. Weiterhin wird die Drehzahldifferenz zwischen der ersten Welle, hier der ersten Getriebeeingangswelle des Doppelkupplungsgetriebes, und der zur Zielgangstufe korrespondierenden Synchrondrehzahl insbesondere fortlaufend ermittelt. Erst dann, wenn die betragsmäßig ermittelte, zuvor genannte Drehzahldifferenz einen vorbestimmten Drehzahldifferenz-Schwellwert erreicht oder unterschreitet, wird die Synchronisiervorrichtung der Zielgangstufe betätigt. Dies ist bei Fig. 2 im Zeitpunkt t₄ der Fall. Zu erkennen ist auch die entsprechende Synchronisierung zwischen den Zeitpunkten t₅ und t₆, also die Synchronisierung der Drehzahl n_{w1} der ersten Welle durch die dann wirksame Synchronisiervorrichtung der Zielgangstufe, insbesondere ist dies erkennbar anhand des Abfalls der Drehzahl n_{W1} der ersten Welle, hier der ersten Getriebeeingangswelle des Doppelkupplungsgetriebes. Erst wenn die Drehzahl n_{W1} der ersten Welle, hier der ersten Getriebeeingangswelle des Doppelkupplungsgetriebes, die entsprechende Synchrondrehzahl erreicht, wird dann die Zielgangstufe wirksam eingelegt und der zugehörige Gangsteller V_{GS} wird entsprechend weiter betätigt bzw. weiter in seine Endposition zum wirksamen Einlegen der Zielgangstufe, hier insbesondere der dritten Gangstufe verschoben. Letzteres ist im Zeitpunkt t₆ bis t₇ der Fall, wo der Gangsteller, hier der Gangsteller zur Einlegung der dritten Gangstufe (3. Gang) zur wirksamen Verbindung der dritten Gangstufe mit der jeweiligen Welle, hier insbesondere des Losrades der dritten Gangstufe mit der ersten Welle, hier der ersten Getriebeeingangswelle des Doppelkupplungsgetriebes, entsprechend geschaltet bzw. verschoben wird. Mit dem Ausdruck "dass die Synchronisiervorrichtung betätigt wird" ist insbesondere bei dem hier dargestellten spezifischen Ausführungsbeispiel gemeint, dass der Gangsteller aus der Neutralposition in Richtung des Einlegens der Zielgangstufe verschoben wird, wodurch die Synchronisiervorrichtung angesteuert und/oder betätigt wird. Insbesondere nach der Bewegung des Gangstellers aus seiner Neutralposition werden (nach kurzer Zeit) dann die Reibflächen der Synchronisiervorrichtung miteinander in Kontakt kommen, um die Synchronisierung der Drehzahl n_{W1} der ersten Welle tatsächlich zu bewirken. Die Betätigung der Synchronisiervorrichtung durch den jeweiligen anzusteuernden Aktuator, insbesondere hier mit Hilfe des Gangstellers, wird daher grundsätzlich insbesondere durch die entsprechende Ansteuerung des die Synchronisiervorrichtung betätigenden Aktuators, hier des Gangstellers realisiert, wobei insbesondere kurz danach dann aufgrund dieser Ansteuerung die Reibflächen der Synchronisiervorrichtung tatsächlich wirksam miteinander in Kontakt kommen.

Es kann nun auch sein, dass der Zeitraum eine kürzere oder längere Zeitspanne betrifft, bis die Drehzahl n_{W1} der ersten Welle bzw. die entsprechende Drehzahldifferenz den vorbestimmten Drehzahldifferenz-Schwellwert erreicht. Dies ist beispielsweise hier zwischen den Zeitpunkten t₃ und t₄ in Fig. 2 dargestellt. Als "Ausnahme" von der grundsätzlichen Vorgehensweise des erfindungsgemäßen Verfahrens kann dann vorgesehen sein, dass, wenn nach einer vorbestimmten Wartezeit tw, beispielsweise hier zwischen den Zeitpunkten t₃ und t₄, insbesondere von maximal 2 Sekunden, die betragsmäßig ermittelte Drehzahldifferenz den vorbestimmten Drehzahldifferenz-Schwellwert betragsmäßig nicht erreicht oder nicht unterschreitet, die Synchronisiervorrichtung der Zielgangstufe dennoch betätigt wird, um die gewünschte Zielgangstufe dann wirksam einzulegen. Dieser Ausnahme- / Spezialfall soll hier zusätzlich in Fig. 2 durch die Darstellung dieser Zeitspanne t_{w} entsprechend auch als Alternative zum grundsätzlichen erfindungsgemäßen Verfahren aber nur "angedeutet" werden, dargestellt ist dieser Fall in Fig. 2 so nicht. Grundsätzlich gilt aber, dass die Synchronisiervorrichtung der Zielgangstufe erst betätigt wird, wenn die zuvor genannte ermittelte Drehzahldifferenz zwischen der ersten Welle, hier der ersten Getriebeeingangswelle des Doppelkupplungsgetriebes, und der zur Zielgangstufe korrespondierenden Synchrondrehzahl einen vorbestimmten Drehzahldifferenz-Schwellwert betragsmäßig erreicht oder unterschreitet. Als vorbestimmte Drehzahldifferenz-Schwellwerte kommen Umdrehungszahlen von 3000 U/min in Frage. Anders ausgedrückt: Erst dann, wenn die zuvor genannte Drehzahldifferenz kleiner / gleich dem zuvor genannten vorbestimmten Drehzahldifferenz-Schwellwert ist, wird die Synchronisiervorrichtung der Zielgangstufe betätigt bzw. verwendet, um die erste Welle, hier die erste Getriebeeingangswelle des Doppelkupplungsgetriebes auf die zur Zielgangstufe korrespondierende Synchrondrehzahl zu synchronisieren.

Bei dem erfindungsgemäßen Verfahren ist daher auch denkbar, dass eine weitere Gangstufe zur Anpassung der Drehzahl der ersten Welle, hier der ersten Getriebeeingangswelle vor der Betätigung der Synchronisiervorrichtung der Zielgangstufe ansynchronisiert wird, insbesondere bis die Drehzahldifferenz betragsmäßig den vorbestimmten Drehzahldifferenz-Schwellwert erreicht und/oder unterschreitet.

Weiterhin ist denkbar, dass durch das zumindest teilweise Schließen der Kupplung eine Anpassung der Drehzahl der ersten Welle, hier der ersten Getriebeeingangswelle vor der Betätigung der Synchronisiervorrichtung der Zielgangstufe realisiert wird, insbesondere bis die Drehzahldifferenz betragsmäßig den vorbestimmten Drehzahldifferenz-Schwellwert erreicht oder unterschreitet.

Schließlich ist denkbar, dass durch die Erhöhung des Schleppmomentes der Kupplung, eine Anpassung der Drehzahl der ersten Welle, hier insbesondere der ersten Getriebeeingangswelle des Doppelkupplungsgetriebes vor der Betätigung der Synchronisiervorrichtung der Zielgangstufe realisiert wird, insbesondere bis die Drehzahldifferenz betragsmäßig den vorbestimmten Drehzahldifferenz-Schwellwert erreicht oder unterschreitet. Die Erhöhung des Schleppmomentes der Kupplung wird insbesondere durch die Erhöhung des Kühlölstromes realisiert.

Weiterhin kann durch das Schalten des Getriebes in eine Neutralstellung eine Anpassung der Drehzahl der ersten Welle, hier der ersten Getriebeeingangswelle des Doppelkupplungsgetriebes, vor der Betätigung der Synchronisiervorrichtung der Zielgangstufe realisiert werden, bis die Drehzahldifferenz betragsmäßig den vorbestimmten Drehzahldifferenz-Schwellwert erreicht oder unterschreitet. Beispielsweise kann die erste Welle, hier der erste Getriebeeingangswelle des Doppelkupplungsgetriebes "austaumeln", insbesondere bis beispielsweise die maximal zulässige Wartezeit tw verstrichen ist.

Insbesondere kann hier in dem Steuergerät eine maximale Wartezeit t_{W} hinterlegt sein und/oder in Abhängigkeit bestimmter Gangstufenwechsel können verschiedene bestimmte maximale Wartezeiten abspeichert und/oder hinterlegt sein. Dies ist abhängig vom jeweiligen Anwendungsfall und/oder der spezifischen Ausgestaltung des erfindungsgemäßen Verfahrens.

Schließlich kann in dem Steuergerät mindestens ein hinterlegtes Schaltmuster, insbesondere mehrere hinterlegte Schaltmuster vorgesehen sein, die in Abhängigkeit der Drehzahl der ersten Welle, hier insbesondere der ersten Getriebeeingangswelle des Doppelkupplungsgetriebes, in Abhängigkeit der gewünschten Zielgangstufe, in Abhängigkeit des bestimmten Drehzahldifferenz-Schwellwertes und/oder in Abhängigkeit der zur Zielgangstufe korrespondierenden Synchrondrehzahl dann hierauf basierend mindestens eine weitere Gangstufe zur Anpassung der Drehzahl der ersten Welle, hier insbesondere der ersten Getriebeeingangswelle des Doppelkupplungsgetriebes in Richtung der Synchrondrehzahl vorgibt bzw. entsprechend vorgeben.

Das oben geschilderte erfindungsgemäße Verfahren kann nicht nur für andere Gangstufenwechsel, beispielsweise vom zweiten in den vierten Gang angewendet werden, wobei insbesondere bei einem Doppelkupplungsgetriebe dann als "erste Welle" die zweite Getriebeeingangswelle synchronisiert wird, sondern für alle Arten von automatischen Schaltgetrieben, das mehrere Wellen aufweist und dann eine dieser Wellen als "erste Welle", beispielsweise eine Getriebeeingangswelle oder eine Zwischenwelle des Getriebes, entsprechend synchronisiert werden muss.

### Bezugszeichenliste

t Zeit
t₁ Zeitpunkt 1
t₂ Zeitpunkt 2
t₃ Zeitpunkt 3
t₄ Zeitpunkt 4
t₅ Zeitpunkt 5
t₆ Zeitpunkt 6
t₇ Zeitpunkt 7
t_{W} Wartezeit
n Drehzahl
n_{W1} Drehzahl der ersten Welle, hier insbesondere der ersten Getriebeeingangswelle
   eines Doppelkupplungsgetriebes
n_{W2} Drehzahl einer weiteren Welle, hier insbesondere der zweiten Getriebeeingangswelle eines Doppelkupplungsgetriebes
n_{MW} Motorwellendrehzahl
V_{GS} Verlauf des Gangstellers

## Patentansprüche

1. Verfahren zum Schutz vor einer Überlastung einer Synchronisiervorrichtung eines automatischen Getriebes eines Kraftfahrzeugs, insbesondere eines automatisierten Schaltgetriebes, vzw. eines Doppelkupplungsgetriebes, wobei das Getriebe mindestens eine Kupplung, mindestens eine erste und eine zweite Welle, mindestens zwei Gangstufen, mindestens einen Gangsteller, vorzugsweise mehrere Gangsteller, zum wirksamen Ein- oder Auslegen der jeweiligen Gangstufen und mindestens zwei Svnchronisiervorrichtunaen aufweist, wobei jeweils eine der mindestens zwei Synchronisiervorrichtungen jeweils mindestens einer der mindestens zwei Gangstufen zugeordnet ist, wobei über die jeweilige, wirksam eingelegte Gangstufe ein Drehmoment von der ersten Welle auf die zweite Welle (oder umgekehrt) übertragbar ist, wobei bei einem Gangstufenwechsel von einer wirksam eingelegten Ist-Gangstufe in eine Zielgangstufe die Drehzahl der zu synchronisierenden ersten Welle auf die zur Zielgangstufe korrespondierende Synchrondrehzahl mit Hilfe der der Zielgangstufe zugeordneten Synchronisiervorrichtung zumindest teilweise angepasst wird, und wobei mindestens ein Steuergerät zur Realisierung der Gangstufenwechsel des Getriebes und/oder zur Steuerung der Kupplung und/oder zur Steuerung der Synchronisiervorrichtungen und/oder der Gangsteller (V_{GS}) vorgesehen ist, wobei die Drehzahl der ersten Welle (n_{W1}) ermittelt wird, wobei die Drehzahldifferenz zwischen der ersten Welle und der zur Zielgangstufe korrespondierenden Synchrondrehzahl ermittelt wird, wobei erst dann, wenn die betragsmäßig ermittelte Drehzahldifferenz einen vorbestimmten Drehzahldifferenz-Schwellwert von 3000 U/min erreicht oder unterschreitet, die Synchronisiervorrichtung der Zielgangstufe betätigt wird, um die Drehzahl der ersten Welle (n_{W1}) auf die zur Zielgangstufe korrespondierende Synchrondrehzahl zu synchronisieren, nämlich der Gangsteller der entsprechenden Synchronisiervorrichtung aus der Neutralposition in Richtung des Einlegens der Zielgangstufe verschoben wird.

2. Verfahren nach Anspruch 1, **dadurch gekennzeichnet, dass**, wenn nach einer vorbestimmten Wartezeit (tw), insbesondere von maximal 2 Sekunden, ab dem Zeitpunkt, in welchem sich der Gangsteller der entsprechenden Synchronisiervorrichtung in der Neutralposition befindet, die betragsmäßig ermittelte Drehzahldifferenz den vorbestimmten Drehzahldifferenz-Schwellwert nicht erreicht oder nicht unterschreitet, die Synchronisiervorrichtung der Zielgangstufe dennoch betätigt wird, um die gewünschte Zielgangstufe wirksam einzulegen.

3. Verfahren nach Anspruch 1 oder 2, **dadurch gekennzeichnet, dass** erst, wenn die Drehzahl (n_{W1}) der ersten Welle die entsprechende Synchrondrehzahl erreicht, die Zielgangstufe wirksam eingelegt und der zugehörige Gangsteller (V_{GS}) betätigt wird.

4. Verfahren nach einem der Ansprüche 1 bis 3, **dadurch gekennzeichnet, dass** mindestens eine weitere Gangstufe zur Anpassung der Drehzahl (n_{W1}) der ersten Welle vor der Betätigung der Synchronisiervorrichtung der Zielgangstufe ansynchronisiert wird, insbesondere bis die Drehzahldifferenz betragsmäßig den vorbestimmten Drehzahldifferenz-Schwellwert erreicht und/oder unterschreitet.

5. Verfahren nach einem der Ansprüche 1 bis 4, **dadurch gekennzeichnet, dass** durch das zumindest teilweise Schließen der Kupplung eine Anpassung der Drehzahl (n_{W1}) der ersten Welle vor der Betätigung der Synchronisiervorrichtung der Zielgangstufe realisiert wird, insbesondere bis die Drehzahldifferenz betragsmäßig den vorbestimmten Drehzahldifferenz-Schwellwert erreicht und/oder unterschreitet.

6. Verfahren nach einem der Ansprüche 1 bis 4, **dadurch gekennzeichnet, dass** durch die Erhöhung des Schleppmoments der Kupplung, eine Anpassung der Drehzahl (n_{W1}) der ersten Welle vor der Betätigung der Synchronisiervorrichtung der Zielgangstufe realisiert wird, insbesondere bis die Drehzahldifferenz betragsmäßig den vorbestimmten Drehzahldifferenz-Schwellwert erreicht und/oder unterschreitet.

7. Verfahren nach Anspruch 6, **dadurch gekennzeichnet, dass** die Erhöhung des Schleppmoments der Kupplung durch die Erhöhung des Kühlölstroms realisiert wird.

8. Verfahren nach einem der Ansprüche 1 bis 7, **dadurch gekennzeichnet, dass** durch das Schalten des Getriebes bzw. der Gangstufen in eine Neutralstellung, eine Anpassung der Drehzahl (n_{W1}) der ersten Welle vor der Betätigung der Synchronisiervorrichtung der Zielgangstufe realisiert wird, insbesondere bis die Drehzahldifferenz betragsmäßig den vorbestimmten Drehzahldifferenz-Schwellwert erreicht und/oder unterschreitet.

9. Verfahren nach Anspruch 2, **dadurch gekennzeichnet, dass** in dem Steuergerät eine maximale Wartezeit (t_{W}) hinterlegt ist und/oder in Abhängigkeit bestimmter Gangstufenwechsel verschiedene bestimmte maximale Wartezeiten abgespeichert und/oder hinterlegt sind.

10. Verfahren nach einem der Ansprüche 1 bis 9, **dadurch gekennzeichnet, dass** in dem Steuergerät mindestens ein hinterlegtes Schaltmuster in Abhängigkeit der Drehzahl (n_{W1}) der ersten Welle, in Abhängigkeit der gewünschten Zielgangstufe, in Abhängigkeit des bestimmten Drehzahldifferenz-Schwellwertes und/oder in Abhängigkeit der zur Zielgangstufe korrespondierenden Synchrondrehzahl dann hierauf basierend mindestens eine weitere Gangstufe und/oder die Synchronisiervorrichtung dieser Gangstufe zur Anpassung der Drehzahl der ersten Welle in Richtung der Synchrondrehzahl zwischengeschaltet wird.

## Claims

1. A method for protecting against overloading of a synchronizing device of an automatic transmission of a motor vehicle, in particular of an automated manual transmission, preferably of a double clutch transmission, wherein the transmission has at least one clutch, at least a first and a second shaft, at least two gear steps, at least one gear selector, preferably several gear selectors, for effective engaging and disengaging of the relative gear steps and at least two synchronizing devices, wherein one of the at least two synchronizing devices is assigned to at least one of the at least two gear steps, wherein, via the relative effectively engaged gear step, torque is transferable from the first shaft to the second shaft (or vice versa), wherein with a gear step change from an effectively engaged actual gear step to a target gear step the rotational speed of the first shaft to be synchronized is adjusted at least partially to the synchronous rotational speed corresponding to the target gear step with the help of the synchronizing device assigned to the target gear step, and wherein at least one control unit for making the gear step change of the transmission and/or for controlling the clutch and/or for controlling the synchronization devices and/or the gear selectors (V_{GS}) is provided, wherein the rotational speed of the first gear (n_{w1}) is detected, wherein the rotational speed difference between the first shaft and the synchronous rotational speed corresponding to the target gear step is detected, whereby only when it is detected whether the proportionally detected rotational speed difference reaches or falls below a set rotational speed difference-threshold value of 3000 rpm is the synchronizing device of the target gear step actuated to synchronize the rotational speed of the first shaft (n_{w1}) with the synchronous rotational speed corresponding to the target gear step, namely the gear selector of the corresponding synchronizing device is shifted from the neutral position in the direction of the engagement of the target gear step.

2. The method according to claim 1, **characterized in that**, if after a set wait time (t_{W}), in particular a 2-second maximum wait time, from the time at which the gear selector of the corresponding synchronizing device is in the neutral position, the proportionally detected rotational speed difference does not reach or does not fall below the set rotational speed difference - threshold value the synchronizing device of the target gear step is still actuated in order to engage the desired target gear step effectively.

3. The method according to claim 1 or 2, **characterized in that** only if the rotational speed (n_{W1}) of the first shaft reaches the corresponding synchronous rotational speed is the target gear step engaged effectively and the relative gear selector (V_{GS}) actuated.

4. The method according to one of claims 1 to 3, **characterized in that** at least one further gear step for adjusting the rotational speed (n_{W1}) of the first shaft is synchronized before actuation of the synchronizing device of the target gear step, in particular until the rotational speed difference proportionally reaches and/or falls below the set rotational speed difference-threshold value.

5. The method according to one of claims 1 to 4, **characterized in that** by the at least partial shutting of the clutch an adjustment is performed of the rotational speed (n_{W1}) of the first shaft before the actuation of the synchronizing device of the target gear step, in particular until the rotational speed difference proportionally reaches and/or falls below the set rotational speed difference-threshold value.

6. The method according to one of claims 1 to 4, **characterized in that** through the increase of the dragging torque of the clutch, an adjustment of the rotational speed (n_{W1}) of the first shaft before the actuation of the synchronizing device of the target gear step is performed, in particular until the rotational speed difference proportionally reaches and/or falls below the set rotational speed difference-threshold value.

7. The method according to claim 6, **characterized in that** the drag torque of the clutch is increased by increasing the coolant oil flow.

8. The method according to one of claims 1 to 7, **characterized in that** through switching of the transmission or of the gear steps to a neutral position, an adjustment of the rotational speed (n_{W1}) of the first shaft before the actuation of the synchronizing device of the target gear step is achieved, in particular until the rotational speed difference proportionally reaches and/or falls below the set rotational speed difference-threshold value.

9. The method according to claim 2, **characterized in that** in the control unit a maximum wait time (t_{W}) is set and/or depending on given gear step changes different given maximum wait times are stored and/or set.

10. The method according to one of claims 1 to 9, **characterized in that** in the control unit at least one set gear pattern depending on the rotational speed (n_{W1}) of the first shaft, depending on the desired target gear step, depending on the given rotational speed difference-threshold value and/or depending on the synchronous rotational speed corresponding to the target gear step, based on this at least one further gear step and/or the synchronizing device is then interconnected to this gear step to adjust the rotational speed of the first shaft in the direction of the synchronous rotational speed.

## Revendications

1. Procédé de protection contre la surcharge d'un dispositif de synchronisation d'une transmission automatique d'un véhicule automobile, en particulier une transmission manuelle automatisée, de préférence une transmission à double embrayage, la transmission comportant au moins un embrayage, au moins un premier et un deuxième arbre, au moins deux rapports de vitesse, au moins un dispositif de sélection, de préférence plusieurs dispositifs de sélection, pour l'engagement ou le désengagement efficace des rapports de vitesse respectifs et au moins deux dispositifs de synchronisation, chacun des au moins deux dispositifs de synchronisation étant associé respectivement à au moins l'un des au moins deux rapports de vitesse, un couple pouvant être transmis du premier arbre au deuxième arbre (ou inversement) par l'intermédiaire du rapport de vitesse respectif effectivement engagé, dans lequel, lors d'un changement de rapport de vitesse d'un rapport de vitesse réel effectivement engagé à un rapport de vitesse cible, la vitesse de rotation du premier arbre à synchroniser est adaptée au moins partiellement à la vitesse de rotation synchrone correspondant au rapport de vitesse cible à l'aide du dispositif de synchronisation associé au rapport de vitesse cible, et dans lequel il est prévu au moins une unité de commande pour réaliser le changement de rapport de vitesse de la transmission et/ou pour commander l'embrayage et/ou pour commander les dispositifs de synchronisation et/ou les dispositifs de sélection (V_{GS}), la vitesse de rotation du premier arbre (n_{w1}) étant déterminée, la différence de vitesse de rotation entre le premier arbre et la vitesse de rotation synchrone correspondant au rapport de vitesse cible étant déterminée, dans lequel seulement lorsque la différence de vitesse de rotation prédéfinie en termes de quantité atteint ou est inférieure à une valeur seuil de différence de vitesse de rotation prédéfinie de 3000 tr/min, le dispositif de synchronisation du rapport de vitesse cible est actionné pour synchroniser la vitesse de rotation du premier arbre (n_{w1}) avec la vitesse de rotation synchrone correspondant au rapport de vitesse cible, à savoir le dispositif de sélection du dispositif de synchronisation correspondant est déplacé de la position neutre vers l'engagement du rapport de vitesse cible.

2. Procédé selon la revendication 1, **caractérisé en ce que**, après un temps d'attente prédéfini (t_{W}), en particulier d'un maximum de 2 secondes, à partir du moment où le dispositif de sélection du dispositif de synchronisation correspondant est en position neutre, la différence de vitesse de rotation déterminée en termes de quantité n'atteint ou n'est pas inférieure à la valeur seuil de différence de vitesse de rotation prédéfinie, le dispositif de synchronisation du rapport de vitesse cible est néanmoins actionné pour engager efficacement le rapport de vitesse cible souhaité.

3. Procédé selon la revendication 1 ou 2, **caractérisé en ce que** seulement lorsque la vitesse de rotation (n_{W1}) du premier arbre atteint la vitesse de rotation synchrone correspondante, le rapport de vitesse cible est effectivement engagé et le dispositif de sélection associé (V_{GS}) est actionné.

4. Procédé selon l'une des revendications 1 à 3, **caractérisé en ce qu'**au moins un autre rapport de vitesse est synchronisé pour adapter la vitesse de rotation (n_{W1}) du premier arbre avant l'actionnement du dispositif de synchronisation du rapport de vitesse cible, en particulier jusqu'à ce que la différence de vitesse de rotation atteint ou est inférieure à la valeur seuil de différence de vitesse de rotation prédéfinie en termes de quantité.

5. Procédé selon l'une des revendications 1 à 4, **caractérisé en ce que** par la fermeture au moins partielle de l'embrayage, une adaptation de la vitesse de rotation (n_{W1}) du premier arbre est réalisée avant l'actionnement du dispositif de synchronisation du rapport de vitesse cible, en particulier jusqu'à ce que la différence de vitesse de rotation atteint ou est inférieure à la valeur seuil de différence de vitesse de rotation prédéfinie en termes de quantité.

6. Procédé selon l'une quelconque des revendications 1 à 4, **caractérisé en ce qu'**en augmentant le couple de traînée de l'embrayage, une adaptation de la vitesse de rotation (n_{W1}) du premier arbre est réalisée avant l'actionnement du dispositif de synchronisation du rapport de vitesse cible, en particulier jusqu'à ce que la différence de vitesse de rotation atteint ou est inférieure à la valeur seuil de différence de vitesse de rotation prédéfinie en termes de quantité.

7. Procédé selon la revendication 6, **caractérisé en ce que** l'augmentation du couple de traînée de l'embrayage est réalisée en augmentant le débit d'huile de refroidissement.

8. Procédé selon l'une des revendications 1 à 7, **caractérisé en ce qu'**en commutant la transmission ou les rapports de vitesse dans une position neutre, une adaptation de la vitesse de rotation (n_{W1}) du premier arbre est réalisée avant l'actionnement du dispositif de synchronisation du rapport de vitesse cible, en particulier jusqu'à ce que la différence de vitesse de rotation atteint ou est inférieure à la valeur seuil de différence de vitesse de rotation prédéfinie en termes de quantité.

9. Procédé selon la revendication 2, **caractérisé en ce qu'**un temps d'attente maximum (t_{W}) est stocké dans l'unité de commande et/ou divers temps d'attente maximum définis sont enregistrés et/ou stockés en fonction des changements du rapport de vitesse définis.

10. Procédé selon l'une des revendications 1 à 9, **caractérisé en ce que** dans l'unité de commande au moins un modèle de commutation stocké, en fonction de la vitesse de rotation (n_{W1}) du premier arbre, en fonction du rapport de vitesse cible souhaité, en fonction de la valeur seuil de la différence de la vitesse de rotation déterminée et/ou en fonction de la vitesse de rotation synchrone correspondant au rapport de vitesse cible, sur la base de cela au moins un autre rapport de vitesse et/ou le dispositif de synchronisation est alors interposé a ce rapport de vitesse pour adapter la vitesse de rotation du premier arbre en direction de la vitesse de rotation synchrone.
